# EUROPEAN PATENT APPLICATION

(11) **EP 4 818 512 A1**
(43) Date of publication of application: **07.10.2026**
(21) Application number: 26169805.4
(22) Date of filing: 31.03.2026
(51) Int. Cl.: F02P 15/02, F02P 15/08, F02P 17/12, F02B 19/12, F02D 35/02, G01L 23/22, F02D 41/28, F02B 23/08

(54) **SYSTEM AND METHOD FOR MONITORING BY ION CURRENT THE COMBUSTION IN AN INTERNAL COMBUSTION ENGINE**

(30) Priority: 02.04.2025 IT 202500006981
(71) Applicant: FERRARI S.p.A., 41100 Modena (IT)
(72) Inventor: TOMBARI, Lorenzo, 41100 MODENA (IT)
(74) Representative: Studio Torta S.p.A.

(57) **Abstract**

A monitoring system (30) is described for monitoring by ion current the combustion in an internal combustion engine (26) of a vehicle (21), wherein the engine has at least one cylinder (32) defining a combustion chamber (45) and having associated therewith a first spark plug (54), facing the combustion chamber (45), and a second spark plug (58), arranged at a prechamber (56) communicating with the combustion chamber (45) through one or more connecting openings (57). The monitoring system (30) has a digital processing unit (31) provided with at least one acquisition channel (62) associated with a respective cylinder (32) and coupled to the corresponding first and second spark plugs (54, 58) so as to receive a first and, respectively, a second ion current signal (iᵢₒₙ₁, iᵢₒₙ₂), as a function of an ion flow between respective electrodes (2, 3) of the first and second spark plugs (54, 58). Said acquisition channel (62) is configured to process a combined signal (Iᵢₒₙ), resulting from a combination of said first and second ion current signals (iᵢₒₙ₁, iᵢₒₙ₂), to implement monitoring of the combustion of a fuel-air mixture in the combustion chamber (45).

## Description

### CROSS-REFERENCE TO RELATED APPLICATIONS

This patent application claims priority from Italian patent application no. 102025000006981 filed on April 2, 2025, the entire disclosure of which is incorporated herein by reference.

### TECHNICAL FIELD

The present solution relates to a system and method for monitoring the combustion in an internal combustion engine of a vehicle, in particular of a motor vehicle, by means of ion current.

### PRIOR ART

As it is known, vehicles provided with an internal combustion engine comprise spark plugs, arranged at the head of a respective cylinder and actuated to generate an electric arc (spark) that ignites the fuel-air mixture in the combustion chamber, at the end of the compression step of the corresponding cylinder.

It is also known that the same spark plugs can be used as sensors to monitor the combustion process, after ignition of the fuel-air mixture due to the spark (and also before the ignition, to recognize pre-ignitions), by detecting a current, the so-called ion (or ionic) current, due to the flow of ions that occurs between the electrodes of the spark plugs (and which is, in fact, influenced by the combustion process).

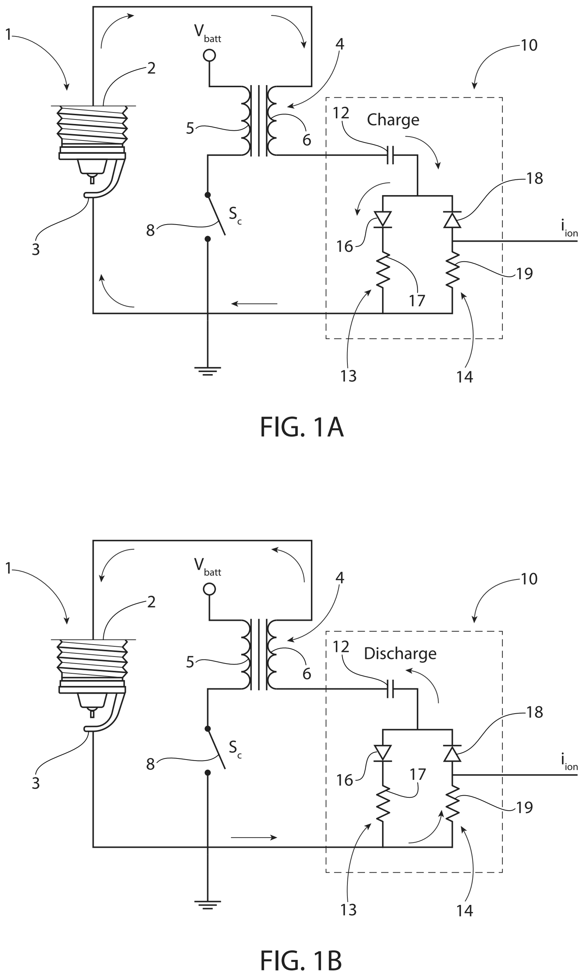

In this regard, Figures 1A and 1B show, in different operating conditions (as will be discussed below), a spark plug 1, having a main electrode 2 and a ground electrode 3, connected to an electrical ground of the internal combustion engine (here not shown).

An ignition coil 4 is associated with the spark plug 1, the ignition coil 4 being provided with a primary winding 5, at low voltage, and with a secondary winding 6, at high voltage (higher than the voltage of the primary winding 5). The primary winding 5 is connected between a power supply device (not shown here), for example the vehicle battery providing a power supply voltage V_{batt}, and the ground reference, through the interposition of a controlled switch 8, receiving (from an engine control unit, not shown here) a control signal S_{c}.

The secondary winding 6 has a first terminal connected to the main electrode 2 of the spark plug 1 and a second terminal connected to an ion current detection stage denoted with 10.

In particular, the detection stage 10 comprises: a biasing capacitor 12, having a first electrode connected to the aforesaid second terminal of the secondary winding 6 and a second electrode; and a charging branch 13 and a discharging branch 14, connected in parallel between the second electrode of the biasing capacitor 12 and the ground reference.

In detail, the charging branch 13 comprises, in the example shown, a first diode 16 having anode connected to the aforesaid second electrode of the biasing capacitor 12 and a first resistor 17, connected between the cathode of the first diode 16 and the ground reference; and the discharging branch 14 comprises, in the example, a second diode 18 having cathode connected to the aforesaid second electrode of the biasing capacitor 12 and a second resistor 19, connected between the anode of the second diode 18 and the ground reference.

During operation, the controlled switch 8 is closed by the control signal S_{c} to supply the primary winding 5 of the ignition coil 4 with an electric current for a charging time such as to "energize" the same ignition coil 4 (i.e. such as to transfer energy thereto); at the end of the charging time the control switch 8 is opened to induce in the secondary winding 6 of the ignition coil 4 a secondary electric current at a high-voltage (for example of the order of thousands of V) which causes the ignition of an electric arc (spark) between the electrodes 2, 3 of the spark plug 1.

This spark, which remains active for a discharging time that is all the longer the greater the energy previously supplied to the ignition coil 4, triggers the combustion of the fuel-air mixture in the ignition chamber associated with the respective cylinder of the engine. Further, the electrical current associated with the spark causes charging of the biasing capacitor 12, at a high charging voltage (e.g., 300 V), as shown in Figure 1A.

The measurement of the ion current, through the spark plug 1, takes place in a subsequent reading phase, after the spark discharge, when the energy in the ignition circuit is exhausted and the combustion proceeds in the combustion chamber.

In particular, as shown in Figure 1B, during the reading phase the biasing capacitor 12 is discharged, with a voltage applied between the electrodes 2, 3 of the spark plug 1 that generates the flow of an ion current between the same electrodes 2, 3. This ion current is indicative of the temperature (and therefore indirectly of the pressure) in the combustion chamber.

An ion current signal, denoted with iᵢₒₙ, indicative of the aforesaid ion current, can for example be extracted from the terminals of the second resistor 19 in the aforesaid discharging branch 14 of the ion current detection stage 10.

This ion current signal iᵢₒₙ may conveniently be provided to a processing unit (here not shown), designed to process the same signal (for example, in relation to a frequency content, an amplitude or a time duration) to determine characteristics of the combustion that is occurring inside the combustion chamber.

In general, a typical trend for the ion current signal iᵢₒₙ involves initial impulsive peaks (or spikes) related to the phase of ignition of the mixture and corresponding to the beginning of the phase of charging of the coil and to the ignition of the spark. These spikes are followed, once the combustion phase has begun, by an ionization phase, in which the presence of two maximum regions in the signal trend is generally highlighted: a first maximum, due to a chemical mechanism, with the occurrence of oxidation-reduction reactions; and a second maximum, subsequent to the first peak, due to a thermal mechanism, with the thermal dissociation of nitrogen monoxide that releases further ions.

As discussed above, the analysis of the characteristics of the ion current signal iᵢₒₙ, which can be performed in the control unit of the motor vehicle 1 (or in a processing unit dedicated to combustion control), can include for example frequency and/or time domain analysis (such as the calculation of the integral of an area underlying the signal) and allows the combustion process to be monitored and in particular to determine parameters such as the pressure in the combustion chamber or other parameters relevant to combustion.

For example, it is known that the ion current signal iᵢₒₙ can advantageously be used, by means of a frequency analysis thereof (in particular by means of a high frequency content analysis), to determine detonation (knocking) phenomena.

It is also known that, for example for the purpose of reducing pollutant emissions, engines with a prechamber combustion system with a double ignition spark plug have been proposed.

This system provides a prechamber, i.e. a small combustion chamber, in communication with the main combustion chamber (provided at the cylinder head), through openings with extremely small diameter, holes or orifices, with calibrated opening. A first spark plug (so-called central spark plug) is arranged at the prechamber, facing the same prechamber.

Under normal conditions of use, the fuel-air mixture is first ignited in the prechamber (by means of the ignition of the spark by the central spark plug) and then, with a turbulent motion through the aforesaid orifices, is directed into the main combustion chamber.

At the main combustion chamber a second spark plug, defined as a lateral spark plug, is provided, which is used under operating conditions (e.g. at low load) in which the spark plug of the prechamber is not used to ignite the mixture.

For example, the use (combined or individual) of the two spark plugs for the ignition of the mixture allows to improve the combustion stability and reduce fuel consumption.

The present Applicant has found that, in a prechamber combustion system with a double ignition spark plug, the combustion control by means of ion current detection may be difficult or, under certain operating conditions, may not be implementable.

As indicated above, in fact, the analysis of the combustion process (for example the detonation analysis) is based on the monitoring of the characteristics of the ion current signal (for example, in terms of frequency content, with the search for typical vibrating modes in the combustion chamber) .

However, there is a very strong filtering effect between the central spark plug (arranged in the prechamber) and the main combustion chamber, due to the geometry of the system and in particular to the small diameter of the orifices that put in communication the prechamber with the main combustion chamber.

Accordingly, in the operating conditions in which the central spark plug is used for the ignition of the fuel-air mixture, the control of the phenomena that occur in the combustion chamber by means of the ion current (detected by the same central spark plug) may not be effective, because of the filtering action (of the low-pass type) due to the geometry of the same prechamber and the access openings towards the main chamber.

On the other hand, a reading of the ion current signal using the lateral spark plug, although possible, would entail a high difficulty in synchronizing the signal reading with respect to the actual combustion, in the event that it occurs in the prechamber and does not involve, as indicated above, the same lateral spark plug but only the central spark plug. Therefore, complex hardware and software modifications would be required for the processing unit dedicated to monitoring of the ion current signal.

Accordingly, the use of further sensors, e.g. accelerometers, is typically required for monitoring of phenomena, e.g. detonations, associated with the combustion process.

Therefore, the need is generally felt to solve the above problem, connected with combustion control, in a more efficient manner.

### OBJECT OF THE INVENTION

An object of the present disclosure is to provide a solution for monitoring combustion using ion current in thermal combustion engines provided with a prechamber and double ignition spark plug, which can allow to satisfy the above need, preferably in a simple and reliable manner.

In accordance with the above object, a monitoring system and method, as defined in the appended claims, are provided according to the present solution.

### BRIEF DESCRIPTION OF THE DRAWINGS

The present invention will now be described with reference to the attached drawings, which show a non-limiting embodiment thereof, wherein:
- Figures 1A and 1B show circuit diagrams associated with detection of ion current by means of a spark plug of a motor vehicle, in two different operating conditions;
- Figure 2 schematically shows a motor vehicle provided with an internal combustion engine;
- Figure 3 shows the engine of the motor vehicle, in a possible implementation;
- Figure 4 is a cross-section of a portion of the engine related to a single cylinder, having associated therewith a pair of spark plugs and a prechamber;
- Figure 5 is a block diagram of a combustion monitoring system, according to an aspect of the present solution;
- Figures 6A-6C and 7 show plots of quantities associated with the monitoring system; and
- Figure 8 is a block diagram of the combustion monitoring system, according to a further aspect of the present solution.

### EMBODIMENTS OF THE INVENTION

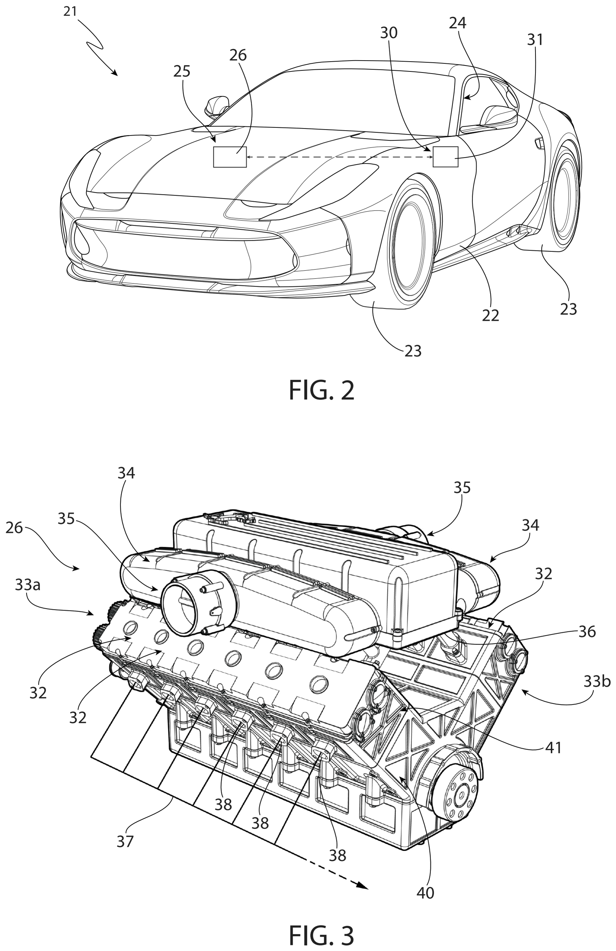

Figure 2 shows a vehicle, in particular a motor vehicle 21, provided with a body 22 resting on the ground by means of wheels 23 and internally defining a passenger compartment 24 for a driver and any passengers.

As schematically shown, the motor vehicle 21 comprises a propulsion system 25 provided with an engine 26 of the internal combustion type (thermal engine) for the generation of energy that is transmitted to the wheels 23 for the propulsion of the same motor vehicle 21 (the aforesaid propulsion system may optionally also comprise at least one electric motor that is coupled to the internal combustion engine creating a hybrid propulsion system).

According to one aspect of the present solution, the motor vehicle 21 further comprises a monitoring system 30, coupled to the engine 26 and configured to monitor its operation, in particular to monitor the combustion of the fuel-air mixture occurring in the combustion chambers of the corresponding cylinders.

The monitoring system 30 comprises a digital processing unit 31 (with a microprocessor, microcontroller or the like), configured to implement the aforesaid monitoring; to this end, the digital processing unit 31 comprises a non-volatile memory that stores software instructions (firmware) designed to carry out the aforesaid monitoring.

In a possible implementation, the digital processing unit 31 may coincide with, or be part of, a control unit (ECU - Electronic Control Unit) of the motor vehicle 21, designed to supervise the general operation of the same motor vehicle 21 (in a known manner, not discussed herein), also including the control of the operation of the aforesaid engine 26.

As shown in Figure 3, in a possible embodiment, the engine 26 comprises a number of cylinders 32 arranged in two banks 33a and 33b forming between them, in the example, an angle of 90°.

The engine 26 is of the type with direct injection of the fuel inside the cylinders 32 to implement an engine cycle including a combustion reaction of the fuel with air.

The engine 26 comprises, for each bank 33a, 33b:
- an intake manifold 34 fed with fresh air through an air intake 35 and connected to the cylinders 32 of the same bank 33a, 33b by means of respective intake ducts 36; and
- an exhaust manifold 37 (schematically shown in Figure 3 in relation to the sole bank 33a) connected to the cylinders 32 of the aforesaid bank 33a, 33b by means of respective exhaust ducts 38 having the function of evacuating the combustion products, commonly known as exhaust gases, from the same cylinders 32.

Each bank 33a, 33b comprises an engine block 40, inside which the respective cylinders 32 are arranged, and an engine head 41, inside which the intake 36 and exhaust 38 ducts are obtained and which is fixed in abutment on an upper side of the engine block 40, above the upper axial ends of the cylinders 32.

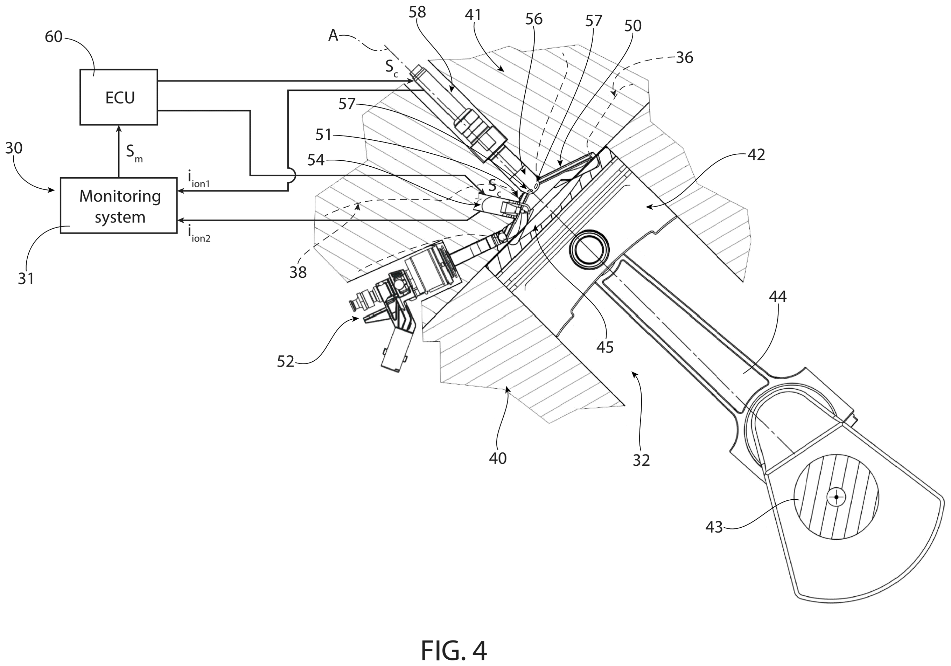

As shown in more detail in Figure 4, each cylinder 32 is coupled to a respective piston 42, which is linearly movable along a respective axis A inside the same cylinder 32 and is mechanically connected to a crankshaft 43 by means of a respective connecting rod 44.

The engine head 41 delimits with a respective cylinder 32 and with the piston 42 movable inside the same cylinder 32 a corresponding combustion chamber 45, in which the engine cycle is carried out.

The intake and exhaust ducts 36, 38 associated with each cylinder 32 communicate with the respective combustion chamber 45 through at least one intake opening and at least one exhaust opening; the flow of air at input to the combustion chamber 45 is controlled by at least one intake valve 50 and similarly, the flow of exhaust gases at output from the combustion chamber 45 is controlled by at least one exhaust valve 51.

The engine 26 further comprises, for each cylinder 32, at least one injector 52 which is selectively activatable to feed unburned fuel inside the respective combustion chamber 45. In the embodiment shown, the injector 52 is mounted at an exhaust region of the engine head 41 in a position adjacent to a respective exhaust opening so that, during operation, an air-fuel counterflow is generated which is adapted to allow an effective homogenization of the corresponding mixture.

According to one aspect of the present solution, the engine 26 is of the type provided with prechamber and double ignition spark plug.

In detail, each cylinder 32 is therefore associated with a first spark plug 54, defined as a lateral spark plug, to cyclically and selectively determine the ignition of the mixture formed by fuel and air present in the respective combustion chamber 45 and to trigger the combustion reaction. The first spark plug 54 is mounted on the engine head 41 in a position adjacent to the respective injector 52 (laterally with respect to the aforesaid axis A of the cylinder 32), in the example at the aforesaid exhaust region of the engine head 41 and protrudes inside the respective combustion chamber 45 (facing the same combustion chamber 45).

Each cylinder 32 is also coupled to a prechamber 56 communicating with the respective combustion chamber 45 through one or more connecting openings or holes 57 (being very small in diameter) and fed with a mixture of fuel and air; and a second spark plug 58, defined as a central spark plug (being arranged centrally and along the aforesaid axis A), protruding inside the prechamber 56 to cyclically and selectively determine the ignition of the mixture present in the same prechamber 56 and to trigger the combustion reaction.

This prechamber 56 is for example of a passive type, i.e. it is exclusively fed by the fuel-air mixture present in the combustion chamber 45 during the movement of the respective piston 42 towards the engine head 41 with consequent compression of the mixture.

In particular, the prechamber 56 is carried by the respective engine head 41 substantially in a central position with respect to the corresponding cylinder 32 and is delimited towards the respective combustion chamber 45 by a convex wall protruding inside the same combustion chamber 45 and bearing the aforesaid connecting openings 57.

The engine 26 can operate under different operating conditions (for example, at low or full load) and, as indicated above, the ignition of the fuel-air mixture can be determined by means of the first spark plug 54 facing the combustion chamber 45 and/or by means of the second spark plug 58 facing the prechamber 56, depending on the needs and the same operating conditions.

As indicated above, the first and second spark plugs 54, 58 receive a respective control signal S_{c} from the control unit (ECU) of the motor vehicle 21, here shown schematically and indicated with 60, as a function of a suitable control strategy of the engine 26.

According to one aspect of the present solution, the aforesaid monitoring system 30 (including the corresponding digital processing unit 31) is coupled to the first and second spark plugs 54, 58 to receive as a feedback a first and respectively a second ion current signal, here indicated with iᵢₒₙ₁ and iᵢₒₙ₂, indicative of the combustion process, and to process jointly and in a combined manner the same first and second ion current signals iᵢₒₙ₁ and iᵢₒₙ₂ to implement monitoring of the combustion inside the corresponding cylinder 32.

The digital processing unit 31 is also operatively coupled to the control unit 60 of the motor vehicle 21 to provide monitoring signals, generally indicated with Sₘ, resulting from the aforesaid combustion monitoring.

As indicated above, the same digital processing unit 31 could alternatively be included in the control unit 60 of the motor vehicle 21 or be implemented in whole or in part by the same control unit 60.

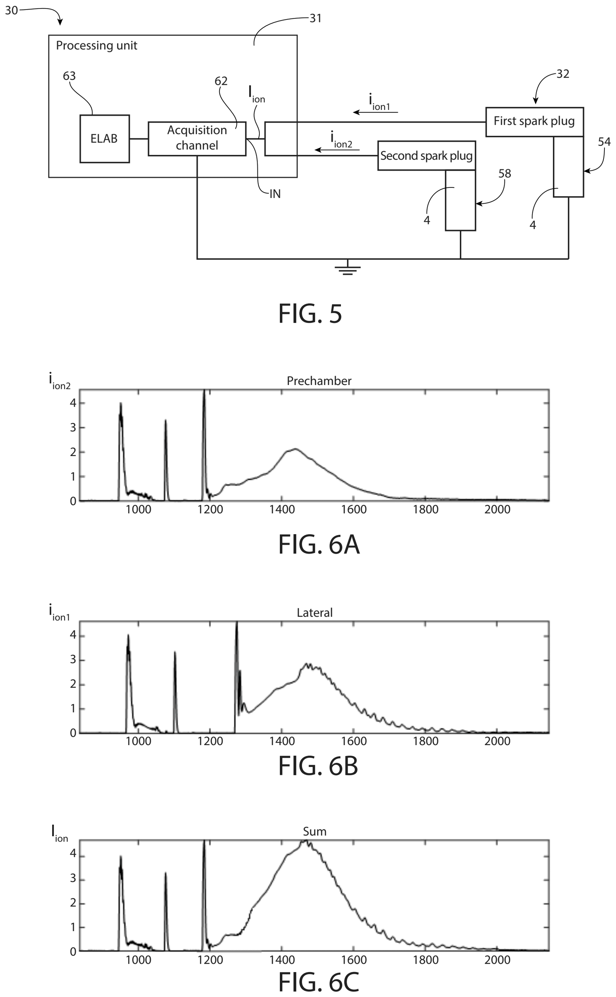

As schematically shown in Figure 5, according to a particular aspect of the present solution, the aforesaid digital processing unit 31 of the monitoring system 30 comprises, associated with a respective cylinder 32 (here schematically shown), at least one acquisition channel 62, which is coupled to the related first and second spark plugs 54, 58 so as to receive the corresponding first and second ion current signals iᵢₒₙ, and iᵢₒₙ₂.

The digital processing unit 31 is configured to jointly process said first and second ion current signals iᵢₒₙ₁ and iᵢₒₙ₂, to implement monitoring of the combustion of the fuel-air mixture in the combustion chamber 45.

In particular, the acquisition channel 62 is configured to combine the aforesaid first and second ion current signals iᵢₒₙ, and iᵢₒₙ₂ to obtain a resulting combined signal, indicated with Iᵢₒₙ.

The digital processing unit 31 further comprises a signal processing stage 63, coupled to the aforesaid acquisition channel 62 and configured to receive and process the combined signal Iᵢₒₙ to implement combustion monitoring and generate the aforesaid monitoring signals Sₘ, as a function of characteristics (e.g. amplitude and/or frequency) of the same combined signal.

As shown schematically in Figure 5, this acquisition channel 62 is electrically connected to the ignition coils (shown schematically and indicated again with 4) of the first and second spark plugs 54, 58, which are, from the perspective of the same acquisition channel 62, connected to each other in parallel (in particular, between a common input IN of the same acquisition channel 62 and the ground reference).

In a manner not shown in detail, the aforesaid acquisition channel 62 can be connected to the discharging branch 14 of the detection stage 10 (reference is made again to Figure 1) of the first and second spark plugs 54, 58, so as to receive the respective first and second ion current signal iᵢₒₙ₁ and iᵢₒₙ₂.

In a possible implementation, the aforesaid combined signal Iᵢₒₙ is a sum signal, obtained as the sum of the first and second ion current signals iᵢₒₙ₁ and iᵢₒₙ₂, to include the sum (or combination, or union) of the characteristics of the same first and second ion current signals iᵢₒₙ₁ and iᵢₒₙ₂. In this example, this combined signal Iᵢₒₙ has a greater amplitude, for example (but not necessarily) substantially double, than the amplitude of the first and second ion current signals iᵢₒₙ, and iᵢₒₙ₂ and also includes the frequency contribution of both the first and second ion current signals iᵢₒₙ, and iᵢₒₙ₂.

For example, in the event that the ignition of the fuel-air mixture is carried out only in the prechamber 56 by the second spark plug 58, the combined signal Iᵢₒₙ advantageously includes both the synchronization content with this ignition associated with the second ion current signal iᵢₒₙ₂, and the high-frequency content associated with the first ion current signal iᵢₒₙ₁ (which is not affected by the filtering action operated by the geometric characteristics of the aforesaid prechamber 56).

In this way, advantageously, the aforesaid signal processing stage 63, which processes the combined signal Iᵢₒₙ, can exploit all the characteristics associated with the first and second ion current signals iᵢₒₙ, and iᵢₒₙ₂ to implement combustion monitoring in the combustion chamber 45.

In general, regardless of where the ignition of the fuel-air mixture occurs, even if an ion current signal has a reduced amplitude (in the aforesaid combination of the signals), the corresponding frequency contribution and content provides, through frequency analysis, useful and significant indications for monitoring of the combustion.

For example, the aforesaid digital processing unit 31 may be configured to perform a detection of a detonation (knocking) condition as a function of the aforesaid first and second ion current signals iᵢₒₙ₁ and iᵢₒₙ₂ and the resulting combined signal Iᵢₒₙ (in a known manner, such detection may be based on the analysis of high-frequency contents of the ion signal).

In this regard, Figure 6A shows the second ion current signal iᵢₒₙ₂, provided as a feedback by the second spark plug 58. In the trend of the signal, two impulsive peaks (or spikes) can be initially recognized, that are related to the phase of ignition of the mixture and correspond to the beginning of the coil charging phase and the ignition of the spark. This portion of the signal is followed, once the combustion phase has begun, by an ionization step of the spark plug due to the combustion process.

Given that the detonation phenomenon (which must be monitored) occurs inside the combustion chamber 45, the second ion current signal iᵢₒₙ₂ is filtered due to the geometry of the prechamber 56 and of the aforesaid connecting openings 57, which operate a low-pass filtering of the signal. In fact, in this second ion current signal iᵢₒₙ₂ the high-frequency components that are, in a known way, typically associated with the detonation phenomenon, are missing.

Figure 6B shows the first ion current signal iᵢₒₙ₁, provided as a feedback by the first spark plug 54. Given that the first spark plug 54 itself faces the combustion chamber 45, this signal is not filtered, and its high-frequency components are thus associated with the detonation phenomenon. However, this first ion current signal iᵢₒₙ₁ is delayed and in any case not synchronized with respect to the actual ignition of the fuel-air mixture, which first occurs inside the prechamber 56.

Advantageously, in this situation the combined signal Iᵢₒₙ, generated by the aforesaid acquisition channel 62 as a combination, in particular as a sum, of the first and second ion current signal iᵢₒₙ, and iᵢₒₙ₂, shown in Figure 6C, includes both the high-frequency characteristics of the first ion current signal iᵢₒₙ₁, and the timing characteristics of the second ion current signal iᵢₒₙ₂, thus allowing a correct monitoring and an accurate analysis of the detonation phenomenon.

As a further example, the aforesaid digital processing unit 31 can be configured, as part of the combustion monitoring operations, to implement an estimate of the propagation speed of the flame front.

In particular, by igniting the fuel-air mixture with the second spark plug 58, arranged at the prechamber 56, the flame front begins its expansion from the centre of the combustion chamber 45. Shortly after ignition, this flame front will reach the first spark plug 54, which will then in turn be hit by a current of ions.

On the acquisition channel 62, the first ion current signal iᵢₒₙ₁ is added to the second ion current signal iᵢₒₙ₂, and the combined signal Iᵢₒₙ has a change in slope when the flame front reaches the first spark plug 54 (i.e., from the moment when the first spark plug 54 starts detecting an ion flow). The time taken to reach the first spark plug 54 can be calculated by the digital processing unit 31 and can be used as an indicator of the combustion quality.

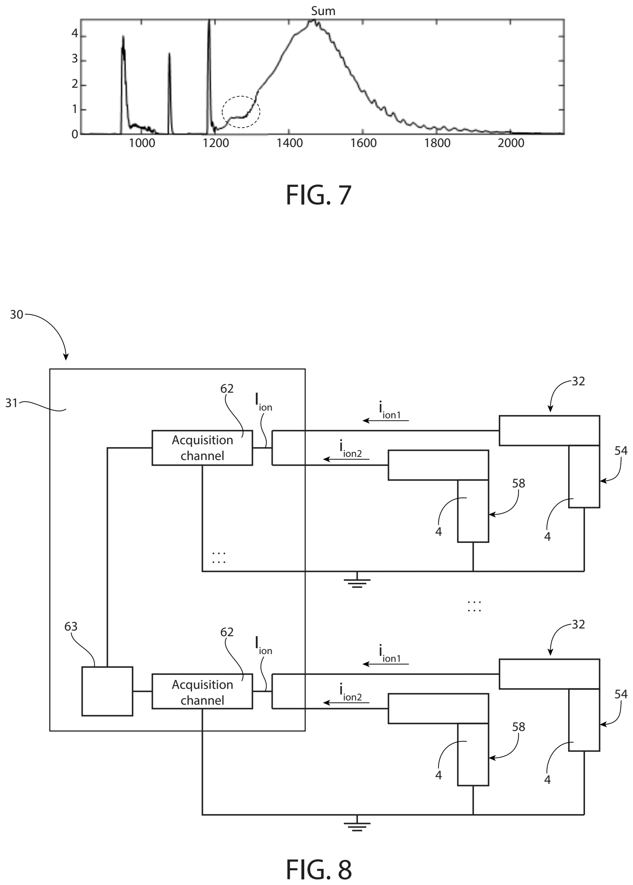

In this regard, Figure 7 again shows a possible trend of the aforesaid combined signal Iᵢₒₙ, in this case with the portion in which the change in slope occurs highlighted, indicative of the first spark plug 54 being reached by the flame front.

As shown in Figure 8, the digital processing unit 31 may typically comprise a certain number (e.g. equal to 8) of acquisition channels 62, each associated with a related cylinder 32 and respective first and second spark plugs 54, 58, which are acquired in parallel by the same acquisition channel 62 (as discussed above) to obtain a combined signal Iᵢₒₙ, which may be processed by the signal processing stage 63, to implement combustion monitoring in the corresponding combustion chamber 45.

In addition, one or more further digital processing units 31 may optionally also be associated with the same engine 26, in the event that the number of acquisition channels 62 provided by a single digital processing unit 31 is not sufficient to cover the total number of cylinders 32 of the engine 26.

From what has been discussed, the advantages that the present solution allows to obtain are evident.

In any case, it is again emphasized that this solution allows to use the detection of the ion currents provided by the spark plugs for combustion monitoring, regardless of the operating condition of the engine and of which one of the first and second spark plugs is used for the ignition of the fuel-air mixture (with the spark occurring only in the prechamber, only in the combustion chamber or in both).

The described solution allows in particular to avoid use of dedicated sensors, for example accelerometers, for monitoring of particular combustion conditions, for example detonation conditions, with savings of cost and construction complexity.

Furthermore, advantageously, the described solution does not require particular changes from the hardware point of view, as compared to the current solutions.

Finally, it is clear that what is described, can be modified and varied without thereby departing from the scope of the present invention, as defined by the attached claims.

It should be noted in particular that the described solution can find advantageous application in any type of vehicle, in particular motor vehicles, which use an internal combustion engine for the propulsion (optionally in combination with one or more electric motors for the generation of hybrid type propulsion systems).

## Claims

1. A monitoring system (30), configured to monitor by means of ion current the combustion in an internal combustion engine (26) of a vehicle (21), said engine (26) including at least one cylinder (32) defining a combustion chamber (45) and having associated therewith a first spark plug (54), facing the combustion chamber (45), and a second spark plug (58), arranged at a prechamber (56) communicating with the combustion chamber (45) through one or more connecting openings (57),
said monitoring system (30) comprising a digital processing unit (31) provided with at least one acquisition channel (62) associated with a respective cylinder (32) and electrically coupled to the corresponding first and second spark plugs (54, 58) so as to receive a first and, respectively, a second ion current signal (iᵢₒₙ₁, iᵢₒₙ₂), as a function of an ion flow between respective electrodes (2, 3) of the first and second spark plugs (54, 58),
wherein said digital processing unit (31) is configured to jointly process said first and second ion current signals (iᵢₒₙ₁, iᵢₒₙ₂), to implement monitoring of the combustion of a fuel-air mixture in the combustion chamber (45).

2. The system according to claim 1, wherein said digital processing unit (31) is configured to process a combined signal (Iᵢₒₙ) resulting from a combination of said first and second ion current signals (iᵢₒₙ₁, iᵢₒₙ₂).

3. The system according to claim 2, wherein said acquisition channel (62) is electrically coupled to a respective ignition coil (4) of the first and second spark plugs (54, 58), which are connected to each other in parallel with respect to said acquisition channel (62); and in which said combined signal (Iᵢₒₙ) is a sum of said first and second ion current signals (iᵢₒₙ₁, iᵢₒₙ₂).

4. The system according to claim 2 or 3, wherein said combined signal (Iᵢₒₙ) includes a combination of the characteristics of amplitude and/or frequency of said first and second ion current signals (iᵢₒₙ₁, iᵢₒₙ₂), having a greater amplitude than the amplitude of the first and second ion current signals (iᵢₒₙ₁, iᵢₒₙ₂) and the frequency contribution of both said first and second ion current signals (iᵢₒₙ₁, iᵢₒₙ₂).

5. The system according to any one of claims 2-4, wherein said digital processing unit (31) is configured to determine a detonation condition in said combustion chamber (45) by means of a frequency analysis of said combined signal (Iᵢₒₙ).

6. The system according to any one of claims 2-5, wherein said digital processing unit (31) is configured to determine a propagation speed of a flame front associated with said combustion by analysing a change in slope of said combined signal (Iᵢₒₙ) when the flame front reaches said first spark plug (54).

7. The system according to any one of claims 2-6, wherein said digital processing unit (31) is configured to monitor said combustion based on said combined signal (Iᵢₒₙ), regardless of an operating condition of the engine (26) and which of the first and second spark plugs (54, 58) is used to ignite the fuel/air mixture, or whether the spark only occurs in the pre-chamber (56), only in the combustion chamber (45) or in both.

8. The system according to any of the preceding claims, wherein said engine (26) includes additional cylinders (32); and wherein said digital processing unit (31) includes additional acquisition channels (62), each associated with a respective one of said additional cylinders (32) and coupled to the corresponding first and second spark plugs (54, 58).

9. The system according to any of the preceding claims, wherein each of said first and second spark plugs (54, 58) is associated with an ignition coil (4), provided with a primary winding (5), connected to a power supply device, and a secondary winding (6), having a first terminal connected to a main electrode (2) of said first or second spark plug (54, 58) and a second terminal connected to a ion current detection stage (10), configured to supply said first or second ion current signal (iᵢₒₙ₁, iᵢₒₙ₂) during a phase following the spark discharge and the start of combustion.

10. A vehicle (21), including an internal combustion engine (26) and a monitoring system (30) according to any of the preceding claims.

11. A method of monitoring by means of ion current the combustion in an internal combustion engine (26) of a vehicle (21), said engine (26) including at least one cylinder (32) defining a combustion chamber (45) and having associated therewith a first spark plug (54) facing the combustion chamber (45), and a second spark plug (58), arranged at a prechamber (56) communicating with the combustion chamber (45) through one or more connecting openings (57),
said method comprising:
receiving a first and, respectively, a second ion current signal (iᵢₒₙ₁, iᵢₒₙ₂) as a function of an ion flow between respective electrodes (2, 3) of the first and second spark plug (54, 58); and
jointly processing said first and second ion current signals (iᵢₒₙ₁, iᵢₒₙ₂), to implement monitoring of the combustion of a fuel/air mixture in the combustion chamber (45) .

12. The method according to claim 11, comprising processing a combined signal (Iᵢₒₙ), resulting from a combination of said first and second ion current signals (iᵢₒₙ₁, iᵢₒₙ₂), to implement said combustion monitoring.

13. The method according to claim 12, wherein said combined signal (Iᵢₒₙ) is obtained as a sum of said first and second ion current signals (iᵢₒₙ₁, iᵢₒₙ₂).

14. The method according to any one of claims 12-13, comprising determining a detonation condition in said combustion chamber (45) by means of a frequency analysis of said combined signal (Iᵢₒₙ).

15. The method according to any one of claims 12-14, comprising determining a propagation velocity of a flame front associated with said combustion by analysing a change in slope of said combined signal (Iᵢₒₙ), which occurs when the flame front reaches said first spark plug (54).
